# EUROPEAN PATENT SPECIFICATION

(11) **EP 1 675 394 B1**
(45) Date of publication and mention of the grant of the patent: **06.02.2008**
(21) Application number: 05257639.4
(22) Date of filing: 13.12.2005
(51) Int. Cl.: H04N 5/76

(54) **Personal video recorder system and method for reproducing a signal in the system**
Persönliches Videorekordersystem und Verfahren zur Wiedergabe eines Signals in dem System.
Système d'enregistreur vidéo personnel et méthode pour la reproduction d'un signal dans le système.

(30) Priority: 13.12.2004 KR 2004104803
(43) Date of publication of application: 28.06.2006
(73) Proprietor: LG Electronics Inc., Yongdungpo-gu Seoul (KR)
(72) Inventor: Baek, Kwan Seung, Gumi-si Gyeongsangbuk-do 730-040 (KR)
(74) Representative: Neobard, William John

(56) References cited:
- EP-A- 1 429 548
- US-A- 5 734 444
- US-A1- 2002 009 285
- US-A1- 2002 147 993
- US-B1- 6 766 100

## Description

The present invention relates to a PVR (personal video recorder) system, and a method of reproducing a transmitted signal. Embodiments relate to a PVR system and a method for reproducing a transmitted signal in the PVR system, which are capable of directly reproducing a video signal without using an MPEG encoding technique when a user wants to watch a current program in real-time thereby to prevent a deterioration of an image quality as well as reproducing a stored video signal when the user wants to watch a past program.

A PVR (personal video recorder), having a storage medium such as a HDD (hard disk drive) to record/reproduce a digital broadcast, has been used to store a digital broadcast input based on an MPEG-2 technology or an NTSC broadcast input encoded by using the MPEG-2 technology into a digital storage medium. For this purpose, unlike the conventional decoder system, the PVR should have a basic configuration suitable for storing an input stream onto a medium such as a hard disk drive during a recording mode and reading the stored stream from the medium and then transmitting the stream to a decoder during a reproducing mode.

Generally, since a PVR digital broadcast receiver having a CPU of high performance records broadcasts in a storage medium such as a hard disk drive for each file, a user can select a program he wants to watch in order to record the program in a reservation manner and watch the program repeatedly. For this purpose, the PVR has a mass storage medium, e.g., a hard disk drive, to store recorded data, i.e., program content data, therein and also has a function of reproducing the data stored in the storage medium.

Herein, the program data stored in the storage medium have to be encoded by using an encoding technique such as an MPEG-2, in order to use the storage medium efficiently. Then, the stored data have to be decoded by using the corresponding decoding technique when a user wants to reproduce the data. Accordingly, a large amount of program content data can be recorded in the storage medium of the PVR.

US-A-5 734 444 discloses a broadcast receiving apparatus for generating a channel selection control signal in response to a channel selection performed by a user. One embodiment disclosed provides a main tuner and a sub tuner to select desired channels in response to the channel selection control signal.

US-B1-6 766 100 discloses a method and system to control multiple TV tuners to allow a user to watch live video at a high quality based on a video capture level independent of a video capture quality used to record playback video.

Typically, the PVR records current broadcast data in the mass storage medium and then reproduce the data immediately to display a current broadcast. That is, in order to reproduce a current broadcast, the current broadcast is encoded by using the MPEG and stored in the storage medium first.

Accordingly, even if a user watches a broadcast in real-time, the image quality thereof may be less satisfactory since high-frequency signals are attenuated during encoding and blocking noise occurs during decoding.

Accordingly, the present invention has been made to address the above-mentioned problems occurring in the prior art.

An object of embodiments is to provide a PVR system and a method for reproducing a transmitted signal in the PVR system, which are capable of directly reproducing a video signal without using an MPEG encoding technique when a user want to watch a current transmission in real-time thereby to prevent a deterioration of an image quality as well as reproducing a stored video signal when the user want to watch a past transmission.

By transmission, it is intended to include content received by radio transmission from a terrestrial antenna, by satellite and by cable. Elsewhere in this application, the term "broadcast" is used and the intention is that this is nonrestrictive and also includes within its scope transmissions by whatever means.

In accordance with one aspect, there is provided a PVR, personal video recorder, system comprising: a first tuner for tuning to a channel among a plurality of transmitted channels and extracting an audio/video signal from the tuned channel; a second tuner for tuning to a channel among a plurality of transmitted channels and extracting an audio/video signal from the tuned channel, which is the same as the transmitted channel tuned by the first tuner; an A/V switch for switching the audio/video signals respectively extracted by the first and the second tuner and for outputting a switched signal in response to each input; a first signal processing unit for image-processing a first video signal of the video signals outputted from the A/V switch to reproduce the channel tuned by the first tuner in real-time; a second signal processing unit for encoding a second video signal of the video signals outputted from the A/V switch to store the transmitted channel tuned by the second tuner, which is the same as the transmitted channel tuned by the first tuner; a data storage unit for storing the video signal processed by the second signal processing unit; and a controller for causing display of the video signal processed by the first signal processing unit or the video signal processed by the second signal processing unit and stored in the data storage unit.

In accordance with another aspect there is provided a method for reproducing a transmitted signal in a PVR system, comprising the steps of: (a) processing a video signal through a first path to reproduce a channel tuned by a first tuner in real-time, the first tuner extracting an audio/video signal from the tuned channel and the first path including the first tuner, an A/V switch for switching the audio/video signal extracted by the first tuner and for outputting a switched signal in response thereto, and a first signal processing unit for image-processing a first video signal outputted from the A/V switch; (b) tuning to a channel by a second tuner, which is the same as the channel tuned by the first tuner, and encoding and storing a video signal of the channel through a second path, the second tuner extracting an audio/video signal from the tuned channel and the second path including the second tuner, an A/V switch for switching the audio/video signal extracted by the second tuner and for outputting a switched signal in response thereto, and a second signal processing unit for image-processing a second video signal outputted from the A/V switch; and (c) reproducing and displaying the video signal processed in the step (a) if a current mode for watching a real-time transmission is selected, and reading and reproducing the video signal stored in the step (b) if a past mode for watching a past transmission is selected.

Embodiments of the invention will be now be described, by way of example only, in conjunction with the accompanying drawings, in which:
FIG. 1 is a block diagram showing a PVR system embodying the present invention;
FIG. 2 is a screen displayed to a user;
FIG. 3 is a flow chart of a PVR system;
FIG. 4 is a flow chart of a second PVR system;
FIG. 5 is a flow chart of a third PVR system; and
FIG. 6 is a flow chart of a fourth PVR system.

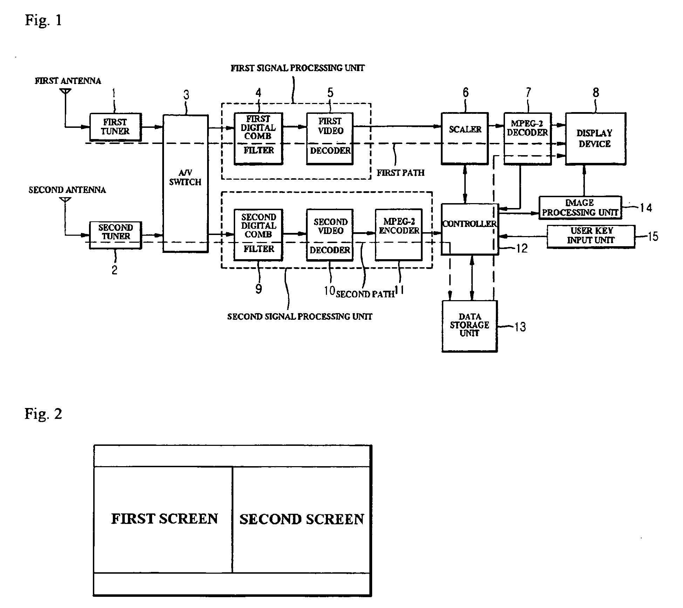

Referring to FIG. 1, a PVR (personal video recorder) system includes a first tuner 1 and a second tuner 2 for extracting an audio/video signal received from a first antenna and a second antenna; an A/V switch 3 for switching the audio/video signal extracted by the first tuner 1 and the second tuner 2; a first digital comb filter 4 for separating the video signal outputted from the AN switch 3 into a luminance signal Y and a color signal C; a first video decoder 5 for converting the luminance signal Y and the color signal C separated by the first digital comb filter 4 into the luminance signal Y and a chrominance signal (U, V); a scaler 6 for matrix-transforming and processing the luminance and chrominance signals outputted from the first video decoder 5 and outputting an (R, G, B) signal; an MPEG-2 decoder 7 for image-processing the (R, G, B) signal processed by the scaler 6 to display it on a display device 8; a second digital comb filter 9 for separating the video signal outputted from the A/V switch 3 into a luminance signal Y and a color signal C; a second video decoder 10 for converting the luminance signal Y and the color signal C separated by the second digital comb filter 9 into the luminance signal Y and a chrominance signal (U, V); an MPEG-2 encoder 11 for encoding the luminance signal Y and the chrominance signal (U, V) by using an MPEG technology after matrix-transforming them in order to store them as a digital video signal; a controller 12 for controlling a current broadcast play and a past broadcast play; a data storage unit 13 for storing a broadcast program encoded by the MPEG-2 encoder 11; and an image processing unit 14 for displaying a screen where a user can select an image of high quality.

In this embodiment, the PVR system includes a key input unit 15 so that a user can select a screen to be displayed through the key input unit 15.

Herein, the first tuner 1 and the AN switch 3, the first digital comb filter 4 and the first video decoder 5 form a first signal processing unit for reproducing a broadcast program in real-time.

The second tuner 2 and the A/V switch 3, the second digital comb filter 9, the second video decoder 10 and the MPEG-2 encoder 11 form a second signal processing unit, which tunes into a broadcast channel same as that tuned by the first tuner 1 and then performs an encoding process for storing.

By using the above-mentioned configuration, when a current mode for watching a current broadcast is chosen, a broadcast signal processed via a first path consisting of the first tuner 1 and the A/V switch 3, the first digital comb filter 4 and the first video decoder 5 may be displayed.

When a past mode for watching a past broadcast is selected, a broadcast signal processed through a second path including the second tuner 2 and the AN switch 3, the second digital comb filter 9, the second video decoder 10 and the MPEG-2 encoder 11 may be read from the data storage unit 13 and then displayed.

The first tuner 1 and the second tuner 2 tune into a channel among a plurality of broadcast channels received from antennas.

The first tuner 1 extracts a synthetic image signal of a primary channel and the first tuner 2 also extracts a synthetic image signal of a secondary channel.

The AN switch 3 outputs a switched signal in response to each input such as an external input.

The first digital comb filter 4 separates the video signal outputted from the A/V switch 3 for switching the audio/video signal extracted by the first tuner 1 into the luminance signal and the color signal

The first video decoder 5 performs a decoding process to transform the luminance and the color signals separated by the first digital comb filter 4 into the luminance signal and the chrominance signal.

The scaler 6 image-processes a digital image signal to output an (R, G, B) signal by using a matrix-transform of the luminance and the chrominance signals outputted from the first video decoder 5.

Additionally, the scaler 6 receives an encoded digital image stored in the data storage unit 13 from the controller 12 and decodes the encoded digital image and converts a format of the decoded digital image to suit the display device 8.

The scaler 6 performs a matrix-conversion of the luminance and the chrominance signals inputted from the first video decoder 5. The scaler 6 converts the digital luminance signal Y and the chrominance signal (U, V) into the (R, G, B) signal and provides it to the display device 8 through the MPEG-2 decoder 7.

The MPEG-2 decoder 7 transforms the inputted (R, G, B) signal to a transmission signal (an LVDS or a TMDS signal) suitable for the display device 8. That is, the MPEG-2 decoder 7 image-processes the (R, G, B) signal processed by the scaler 6 to provide it to the display device 8.

The second digital comb filter 9 separates the video signal outputted from the A/V switch 3 for switching the audio/video signal tuned by the second tuner into the luminance signal and the color signal

The second video decoder 10 performs a decoding process to transform the luminance and the color signals separated by the second digital comb filter 9 into the luminance signal and the chrominance signal.

The MPEG-2 encoder 11 encodes a digital image signal outputted from the second video decoder 10 by using an MPEG technology in order to store it in the data storage unit 13.

The controller 12, including a microprocessor, controls the whole operation of the PVR system. In detail, the controller 12 generates a control signal for tuning the first tuner 1 and the second tuner 2 to a broadcast channel and controls a decoding process of a broadcast signal and a storing and a reading process thereof

The controller 12 provides the scaler 6 with a control signal to reproduce a broadcast signal processed by the first video decoder 5 when a current mode for watching a current broadcast is chosen. If a past mode for watching a past broadcast is selected, the controller 12 reads a corresponding broadcast signal from the data storage unit 13 and supplies it to the scaler 6.

For this purpose, the controller 12 transmits the encoded digital image signal to the scaler 6 through a PCI bus and stores data into the data storage unit 13 and reads data therefrom.

In the following, the data storage unit 13, e.g., HDD (hard disk drive) includes a broadcast signal storage area for storing a broadcast signal (e.g. compressed and encoded program content data) which a user want to record, an EPG (electronic program guide) information storage area for storing EPG information and a user information storage area for storing information such as time information on a reservation recording and bit rate information (bit rate for use in recording a broadcast signal) corresponding to various recording time, e.g., 0.5h, 1h, 1.5h, 2h and the like, and diverse image quality, e.g., HD and SD.

As noted above, FIG. 2 is a screen displayed to a user in an embodiment.

The controller 12 controls the operation of the image processing unit 14 so that one broadcast signal processed by the first signal processing unit and the other broadcast signal processed by the second signal processing unit can be displayed on one display device at the same time through the use of a so-called twin picture function. A user can select and watch one screen of a first screen via a first path (the MPEG-2 encoding is not used) and a second screen via a second path (the MPEG-2 encoding is used). Therefore, the user can watch the screen of an improved image quality based on his/her choice while watching a broadcast program on a PVR system.

In an alternative embodiment, the user can select one of the first screen via the first path and the second screen via the second path when the user sets a time shift default. Further, the user can also select a screen that the user want to watch when PVR data is stored in the data storage unit.

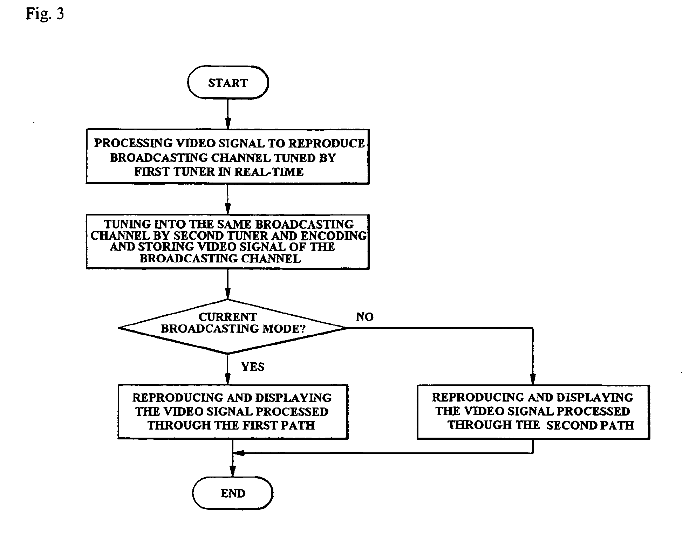

FIG. 3 is a flow chart of a first PVR system.

Referring to FIGs. 1 and 3, an image signal for reproducing a broadcast channel tuned by the first tuner 1 in real-time is processed.

Further, a broadcast channel same as that tuned by the first tuner 1 is tuned by the second tuner 2 and encoded and stored in the data storage unit 13.

The controller 12 determines whether a watching mode is a current mode for reproducing a broadcast in real-time in response to a user's input.

As a result, if the watching mode is the current mode, a broadcast signal processed through the first pass is reproduced via the scaler 6 and displayed.

On the contrary, if the watching mode is the past mode, corresponding broadcast signal encoded and stored in the data storage unit 13 is read and decoded and reproduced via the scaler 6.

For example, if the present time is 10 hour, a signal of 10 hour can be processed along the first path and displayed. However, a past signal (temporarily stored) before 10 hour may be read from a hard disk drive and displayed as usual.

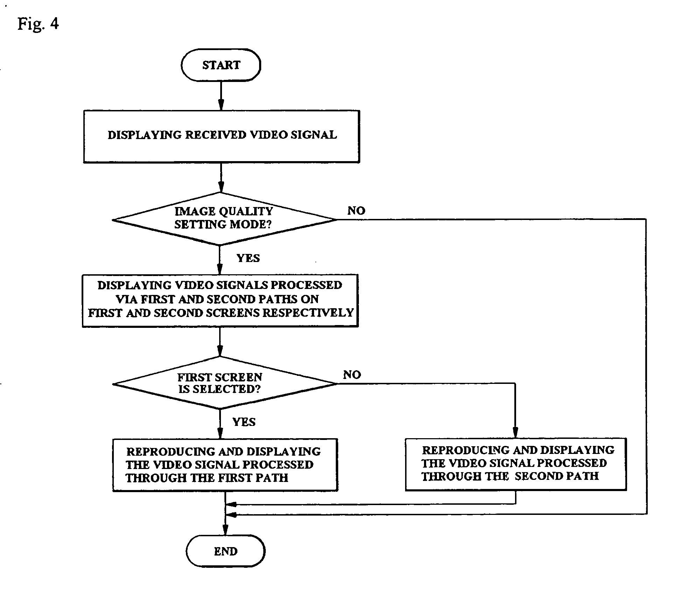

FIG. 4 is a flow chart of a PVR system in accordance with another embodiment of the present invention.

Referring to FIGs. 1 and 4, an image signal for reproducing a broadcast channel tuned by the first tuner 1 in real-time is processed. Further, a broadcast channel same as that tuned by the first tuner 1 is tuned by the second tuner 2 and encoded and stored in the data storage unit 13.

When a user selects an image quality setting mode through the key input unit 14, the controller displays a first screen via the first path and a second screen via the second path at the same time by using the twin picture function.

If the user selects the first screen, a broadcast signal processed through the first path is reproduced and displayed in a full-screen via the scaler 6. Similarly, if the second screen is chosen, a broadcast signal processed through the second path may be displayed in a full-screen.

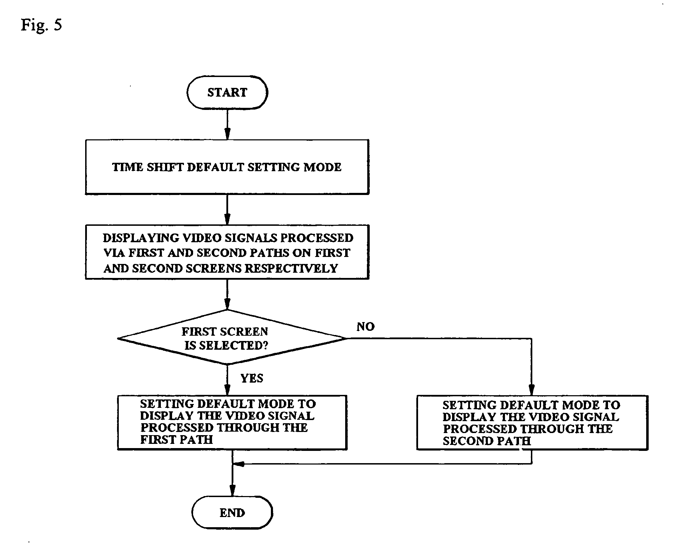

FIG. 5 is a flow chart of a PVR system in accordance with still another embodiment of the present invention.

The user can set a time shift default to basically watch one of the first screen and the second screen as if the user selects the image quality setting mode.

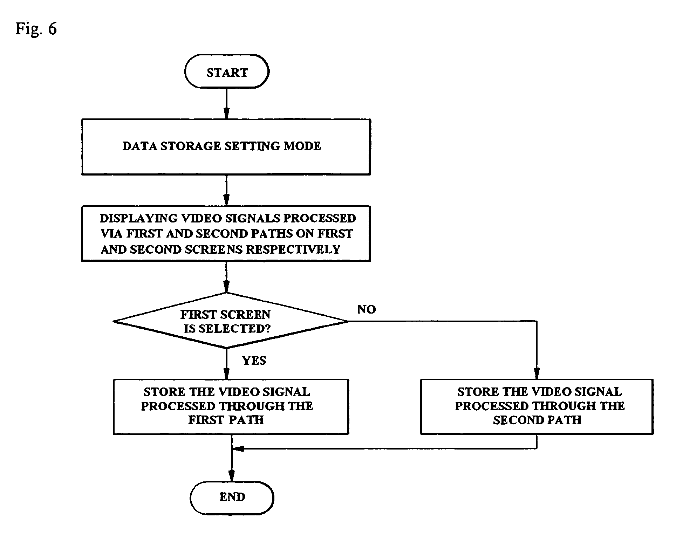

FIG. 6 is a flow chart of a PVR system in accordance with still another embodiment of the present invention.

The user can also store one of the first screen and the second screen as if the user selects the image quality setting mode.

As mentioned above, the present invention does not relate to a method for watching a current broadcast by reproducing a previously recorded signal. That is, the present invention is directed to a method for watching a current broadcast of a channel through the first path while recording a video signal of the same channel along the second path. Further, by displaying screens processed through different paths at the same time, the user can change a display path while watching a broadcast. In addition, the user can set the time shift default as well as the data storage default.

In accordance with the present invention, when a user want to watch a broadcast on the PVR system in real-time, the user doesn't have to watch a video signal which is recorded and then reproduced but the user can watch a video signal through the first path without using the MPEG technique.

Further, since a video signal of a current broadcast is encoded by using the MPEG technique and then stored in the data storage unit, the user can watch the stored video signal when the user want to see a past broadcast as usual.

Therefore, the user can watch a screen of an improved noise since the video signal is not encoded by using the MPEG technique when a current broadcast is played.

Furthermore, by displaying screens processed through different paths at the same time, the user can change a display path while watching a broadcast and can set the time shift default as well as the data storage default.

Although embodiments of the present invention have been described for illustrative purposes, those skilled in the art will appreciate that various modifications, additions and substitutions are possible, without departing from the scope of the invention as defined by the accompanying claims.

## Claims

1. A PVR personal video recorder, system comprising:
a first tuner (1) for tuning to a channel among a plurality of transmitted channels and extracting an audio/video signal from the tuned channel;
a second tuner (2) for tuning to a channel among a plurality of transmitted channels and extracting an audio/video signal from the tuned channel, which is the same as the transmitted channel tuned by the first tuner;
an A/V switch (3) for switching the audio/video signals respectively extracted by the first (1) and the second (2) tuner and for outputting a switched signal in response to each input;
a first signal processing unit (1, 3, 4, 5) for image-processing a first video signal of the video signals outputted from the A/V switch (3) to reproduce the channel tuned by the first tuner in real-time;
a second signal processing unit (2, 3, 9, 10, 11) for encoding a second video signal of the video signals outputted from the A/V switch (3) to store the transmitted channel tuned by the second tuner (2), which is the same as the transmitted channel tuned by the first tuner (1);
a data storage unit (13) for storing the video signal processed by the second signal processing unit (2, 3, 9, 10, 11); and
a controller (12) for causing display of the video signal processed by the first signal processing unit (1, 3, 4, 5) or the video signal processed by the second signal processing unit (2, 3, 9, 10, 11) and stored in the data storage unit (3).

2. A PVR system according to claim 1, wherein the first signal processing unit (1, 3, 4, 5) includes:
a first digital comb filter(4) for separating the video signal outputted from the AN switch (3) which switches the audio/video signal extracted by the first tuner (1) into a luminance signal and a color signal; and
a first video decoder (5) for performing a decoding process to transform the luminance and the color signal separated by the first digital comb filter (4) into the luminance signal and a chrominance signal.

3. A PVR system according to claim 1 or 2, wherein the second signal processing unit (2, 3, 9, 10, 11) includes:
a second digital comb filter(9) for separating the video signal outputted from the A/V switch (3) which switches the audio/video signal extracted by the second tuner (2) into a luminance signal and a color signal;
a second video decoder (10) for performing a decoding process to transform the luminance and the color signal separated by the second digital comb filter (9) into the luminance signal and a chrominance signal; and
an MPEG-2 encoder (11) for encoding an digital image signal outputted from the second video decoder (10) to store the encoded digital image signal in the data storage unit (13).

4. A PVR system according to claim 2, further comprising:
a scaler (6) for processing a digital image signal to output an R, G, B signal by using a matrix-transform of a luminance and a chrominance signals outputted from the first signal processing unit and decoding an encoded digital image; and
an MPEG-2 decoder (7) for image-processing the R, G, B signal processed by the scaler to output the processed (R, G, B) signal to a display device (8).

5. A PVR system according to claim 1, further comprising:
an image processing unit (14) for processing the video signals processed by the first signal processing unit (1, 3, 4, 5) and the second signal processing unit (2, 3, 9, 10, 11) to separate the video signals into a first screen and a second screen and display the first and the second screens.

6. A PVR system according to claim 5, further comprising:
a key input unit (15) connected to the controller (12) for selecting a desired screen between the first and the second screens.

7. A PVR system according to any preceding claim, wherein the first tuner (1) and the second tuner (2) are one of an ATSC tuner and an NTSC tuner.

8. A PVR system according to claim 5 or 6, wherein the controller (12) is configured to control the image processing unit (14) to display one of the video signal processed by the first signal processing unit (1, 3, 4, 5) and the video signal processed by the second signal processing unit (2, 3, 9, 10, 11) according to a user's input regarding an image quality setting.

9. A PVR system according to claim 5 or 6, wherein the controller (12) is configured to control the image processing unit (14) to basically display one of the video signal processed by the first signal processing unit (1, 3, 4, 5) and the video signal processed by the second signal processing unit (2, 3, 9, 10, 11) according to a user's input regarding a time shift default setting.

10. A PVR system according to claim 5 or 6, wherein the controller (12) is configured to store one of the video signal processed by the first signal processing unit (1, 3, 4, 5) and the video signal processed by the second signal processing unit (2, 3, 9, 10, 11) in the data storage unit (13) according to a user's input regarding a data storage setting.

11. A method for reproducing a transmitted signal in a PVR system, comprising the steps of
(a) processing a video signal through a first path to reproduce a channel tuned by a first tuner (1) in real-time, the first tuner (1) extracting an audio/video signal from the tuned channel and the first path including the first tuner (1), an AN switch (3) for switching the audio/video signal extracted by the first tuner (1) and for outputting a switched signal in response thereto, and a first signal processing unit (1, 3, 4, 5) for image-processing a first video signal outputted from the AN switch (3);
(b) tuning to a channel by a second tuner (2), which is the same as the channel tuned by the first tuner (1), and encoding and storing a video signal of the channel through a second path, the second tuner (2) extracting an audio/video signal from the tuned channel and the second path including the second tuner (2), an AN switch (3) for switching the audio/video signal extracted by the second tuner (2) and for outputting a switched signal in response thereto, and a second signal processing unit (2, 3, 9, 10, 11) for image-processing a second video signal outputted from the AN switch (3); and
(c) reproducing and displaying the video signal processed in the step (a) if a current mode for watching a real-time transmission is selected, and reading and reproducing the video signal stored in the step (b) if a past mode for watching a past transmission is selected.

12. A method of claim 11, further comprising:
selecting an image quality setting mode by a user;
displaying, when the image quality setting mode is selected, a first screen via the first path and a second screen via the second path; and
setting an image quality by selecting one of the first and second screens,
wherein the video signal processed through the first path is reproduced and displayed if the selected screen is the first screen and wherein the video signal encoded and stored through the second path is read and reproduced if the selected screen is the second screen.

13. A method of claim 11, further comprising:
selecting a time shift default mode by a user;
displaying, when the time shift default mode is selected, a first screen via the first path and a second screen via the second path; and
setting a time shift default by selecting one of the first and second screens,
wherein the time shift default is set to reproduce and display the video signal processed through the first path if the selected screen is the first screen and wherein the time shift default is set to read and reproduce the video signal processed through the second path if the selected screen is the second screen.

14. A method of claim 11, further comprising:
selecting a data storage setting mode by a user;
displaying, when the data storage setting mode is selected, a first screen via the first path and a second screen via the second path; and
storing a video signal according to a selection of one of the first and second screens,
wherein the video signal processed through the first path is stored by selecting the first screen and wherein the video signal processed through the second path is stored by selecting the second screen.

## Patentansprüche

1. PVR-Personal-Video-Recorder-System, welches aufweist:
einen ersten Tuner (1) zum Einstellen eines Kanals aus einer Mehrzahl übertragener Kanäle und Extrahieren eines Audio-/Videosignals aus dem eingestellten Kanal;
einen zweiten Tuner (2) zum Einstellen eines Kanals aus einer Mehrzahl übertragener Kanäle und Extrahieren eines Audio-/Videosignals aus dem eingestellten Kanal, der derselbe wie der übertragene Kanal ist, auf den der erste Tuner eingestellt ist;
einen A/V-Schalter (3) zum Schalten der Audio-/Videosignale, die von dem ersten (1) und dem zweiten (2) Tuner extrahiert wurden, und zum Ausgeben eines geschalteten Signals als Antwort auf jede Eingabe;
eine erste Signalverarbeitungseinheit (1, 3, 4, 5) zur Bildverarbeitung eines ersten Videosignals der von dem A/V-Schalter (3) ausgegebenen Videosignale, um den von dem ersten Tuner eingestellten Kanal in Echtzeit wiederzugeben;
eine zweite Signalverarbeitungseinheit (2, 3, 9, 10, 11) zum Kodieren eines zweiten Videosignals der von dem A/V-Schalter (3) ausgegebenen Videosignale, um den von dem zweiten Tuner (2) eingestellten übertragenen Kanal zu speichern, der derselbe wie der von dem ersten Tuner (1) eingestellte übertragene Kanal ist;
eine Datenspeichereinheit (13) zum Speichern des von der zweiten Signalverarbeitungseinheit (2, 3, 9, 10, 11) verarbeiteten Videosignals und
eine Steuerung (12), um die Anzeige des von der ersten Signalverarbeitungseinheit (1, 3, 4, 5) verarbeiteten Signals oder des von der zweiten Signalverarbeitungseinheit (2, 3, 9, 10, 11) verarbeiteten und in der Datenspeichereinheit (3) gespeicherten Videosignals zu veranlassen.

2. PVR-System nach Anspruch 1, wobei die erste Signalverarbeitungseinheit (1, 3, 4, 5) aufweist:
einen ersten digitalen Kammfilter (4) zum Trennen des von dem A/V-Schalter (3) ausgegebenen Videosignals, der das von dem ersten Tuner (1) extrahierte Audio-/Videosignal in ein Helligkeitssignal und ein Farbsignal schaltet, und
einen ersten Videodekoder (5) zur Ausführung eines Dekodierungsprozesses zur Umwandlung des von dem ersten digitalen Kammfilter (4) getrennten Helligkeits- und des Farbsignals in das Helligkeitssignal und ein Farbwertsignal.

3. PVR-System nach Anspruch 1 oder 2, wobei die zweite Signalverarbeitungseinheit (2, 3, 9, 10, 11) aufweist:
einen zweiten digitalen Kammfilter (9) zum Trennen des von dem A/V-Schalter (3) ausgegebenen Videosignals, der das von dem zweiten Tuner (2) extrahierte Audio-/Videosignal in ein Helligkeitssignal und ein Farbsignal schaltet;
einen zweiten Videodekoder (10) zur Ausführung eines Dekodierungsprozesses zur Umwandlung des von dem zweiten digitalen Kammfilter (9) getrennten Helligkeits- und des Farbsignals in das Helligkeitssignal und ein Farbwertsignal und
einen MPEG-2-Kodierer (11) zur Kodierung eines von dem zweiten Videodekoder (10) ausgegebenen digitalen Bildsignals, um das kodierte digitale Bildsignal in der Datenspeichereinheit (13) zu speichern.

4. PVR-System nach Anspruch 2, weiterhin aufweisend:
einen Scaler (6) zur Verarbeitung eines digitalen Bildsignals zur Ausgabe eines RGB-Signals mittels einer Matrixtransformation eines von der ersten Signalverarbeitungseinheit ausgegebenen Helligkeits- und eines Farbwertsignals und Dekodierung eines kodierten digitalen Bildes und einen MPEG-2-Dekoder (7) zur Bildverarbeitung des vom Scaler verarbeiteten RGB-Signals, um das verarbeitete RGB-Signal an eine Anzeigeeinrichtung (8) auszugeben.

5. PVR-System nach Anspruch 1, weiterhin aufweisend:
eine Bildverarbeitungseinheit (14) zum Verarbeiten der von der ersten Signalverarbeitungseinheit (1, 3, 4, 5) und der zweiten Signalverarbeitungseinheit (2, 3, 9, 10, 11) verarbeiteten Videosignale, um die Videosignale in einen ersten Bildschirm und einen zweiten Bildschirm zu trennen und den ersten und den zweiten Bildschirm anzuzeigen.

6. PVR-System nach Anspruch 5, weiterhin aufweisend:
eine mit der Steuerung (12) verbundene Tasteneingabeeinheit (15) zur Auswahl eines gewünschten Bildschirms aus dem ersten und dem zweiten Bildschirm.

7. PVR-System nach jedem beliebigen vorstehenden Anspruch, wobei der erste Tuner (1) und der zweite Tuner (2) ein ATSC-Tuner oder ein NTSC-Tuner ist.

8. PVR-System nach Anspruch 5 oder 6, wobei die Steuerung (12) konfiguriert ist, die Bildverarbeitungseinheit (14) zu steuern, um eines des von der ersten Signalverarbeitungseinheit (1, 3, 4, 5) verarbeiteten Videosignals und des von der zweiten Signalverarbeitungseinheit (2, 3, 9, 10, 11) verarbeiteten Videosignals entsprechend einer Benutzereingabe hinsichtlich einer Bildqualitäteinstellung anzuzeigen.

9. PVR-System nach Anspruch 5 oder 6, wobei die Steuerung (12) konfiguriert ist, die Bildverarbeitungseinheit (14) zu steuern, um im wesentlichen eines des von der ersten Signalverarbeitungseinheit (1, 3, 4, 5) verarbeiteten Videosignals und des von der zweiten Signalverarbeitungseinheit (2, 3, 9, 10, 11) verarbeiteten Videosignals entsprechend einer Benutzereingabe hinsichtlich einer Zeitverschiebungs-Voreinstellung anzuzeigen.

10. PVR-System nach Anspruch 5 oder 6, wobei die Steuerung (12) konfiguriert ist, eines des von der ersten Signalverarbeitungseinheit (1, 3, 4, 5) verarbeiteten Videosignals und des von der zweiten Signalverarbeitungseinheit (2, 3, 9, 10, 11) verarbeiteten Videosignals entsprechend einer Benutzereingabe hinsichtlich einer Datenspeicherungseinstellung in der Datenspeichereinheit (13) zu speichern.

11. Verfahren zur Wiedergabe eines übertragenen Signals in einem PVR-System, die folgenden Schritte aufweisend:
(a) Verarbeiten eines Videosignals über einen ersten Pfad zur Wiedergabe eines von einem ersten Tuner (1) eingestellten Kanals in Echtzeit, wobei der erste Tuner (1) ein Audio-/Videosignal aus dem eingestellten Kanal und dem ersten Pfad einschließlich des ersten Tuners (1), eines A/V-Schalters (3) zum Schalten des von dem ersten Tuner (1) extrahierten Audio-/Videosignals und zur Ausgabe eines geschalteten Signals als Antwort darauf sowie einer ersten Signalverarbeitungseinheit (1, 3, 4, 5) zur Bildverarbeitung eines ersten von dem A/V-Schalter (3) ausgegebenen ersten Videosignals extrahiert;
(b) Einstellen eines Kanals durch einen zweiten Tuner (2), der derselbe Kanal ist wie der von dem ersten Tuner (1) eingestellte Kanal, und Kodieren und Speichern eines Videosignals des Kanals über einen zweiten Pfad, wobei der zweite Tuner (2) ein Audio-/Videosignal aus dem eingestellten Kanal und dem zweiten Pfad einschließlich des zweiten Tuners (2), eines A/V-Schalters (3) zum Schalten des von dem zweiten Tuner (2) extrahierten Audio-/Videosignals und zur Ausgabe eines geschalteten Signals als Antwort darauf sowie einer zweiten Signalverarbeitungseinheit (2, 3, 9, 10, 11) zur Bildverarbeitung eines zweiten von dem A/V-Schalter (3) ausgegebenen zweiten Videosignals extrahiert, und
(c) Wiedergeben und Anzeigen des in Schritt (a) verarbeiteten Videosignals, wenn eine Aktuell-Betriebsart zum Betrachten einer Echtzeitübertragung gewählt ist, und Lesen und Wiedergeben des in Schritt (b) gespeicherten Videosignals, wenn eine Vergangenheits-Betriebsart zum Betrachten einer früheren Übertragung gewählt ist.

12. Verfahren nach Anspruch 11, weiterhin aufweisend:
Auswählen einer Bildqualitätseinstellungsbetriebsart durch einen Benutzer;
Anzeigen eines ersten Bildschirms über den ersten Pfad und eines zweiten Bildschirms über den zweiten Pfad, wenn die Bildqualitätseinstellungsbetriebsart gewählt ist, und
Einstellen einer Bildqualität durch Auswahl des ersten oder des zweiten Bildschirms,
wobei das über den ersten Pfad verarbeitete Videosignal wiedergegeben und angezeigt wird, wenn der ausgewählte Bildschirm der erste Bildschirm ist, und wobei das über den zweiten Pfad kodierte und gespeicherte Videosignal gelesen und wiedergegeben wird, wenn der ausgewählte Bildschirm der zweite Bildschirm ist.

13. Verfahren nach Anspruch 11, weiterhin aufweisend:
Auswählen einer Zeitverschiebungs-Voreinstellungsbetriebsart durch einen Benutzer,
Anzeigen eines ersten Bildschirms über den ersten Pfad und eines zweiten Bildschirms über den zweiten Pfad, wenn die Zeitverschiebungs-Voreinstellungsbetriebsart gewählt ist, und
Einstellen eines Zeitverschiebungs-Voreinstellungswerts durch Auswählen des ersten oder des zweiten Bildschirms,
wobei der Zeitverschiebungs-Voreinstellungswert eingestellt ist, das über den ersten Pfad verarbeitete Videosignal wiederzugeben und anzuzeigen, wenn der ausgewählte Bildschirm der erste Bildschirm ist, und wobei der Zeitverschiebungs-Voreinstellungswert eingestellt ist, das über den zweiten Pfad verarbeitete Videosignal zu lesen und wiederzugeben, wenn der ausgewählte Bildschirm der zweite Bildschirm ist.

14. Verfahren nach Anspruch 11, weiterhin aufweisend:
Auswählen einer Datenspeicherungseinstellbetriebsart durch einen Benutzer,
Anzeigen eines ersten Bildschirms über den ersten Pfad und eines zweiten Bildschirms über den zweiten Pfad, wenn die Datenspeicherungseinstellbetriebsart gewählt ist, und
Speichern eines Videosignals entsprechend einer Auswahl des ersten oder des zweiten Bildschirms,
wobei das über den ersten Pfad verarbeitete Videosignal durch Auswahl des ersten Bildschirms gespeichert wird und wobei das über den zweiten Pfad verarbeitete Videosignal durch Auswahl des zweiten Bildschirms gespeichert wird.

## Revendications

1. Système d'enregistreur vidéo personnel (PVR) comportant:
un premier syntoniseur (1) en vue de syntoniser à un canal parmi une pluralité de canaux transmis et d'extraire un signal audio - vidéo du canal syntonisé;
un second syntoniseur (2) en vue de syntoniser à un canal parmi une pluralité de canaux transmis et d'extraire un signal audio - vidéo du canal syntonisé, qui est le même que le canal syntonisé transmis par le premier syntoniseur;
un commutateur audio - vidéo (3) en vue de commuter des signaux audio - vidéo extraits respectivement par le premier (1) et le second (2) syntoniseur et en vue de générer en sortie un signal commuté en réponse à chaque entrée;
une première unité de traitement de signaux (1, 3, 4, 5) en vue d'exécuter un traitement d'image d'un premier signal vidéo des signaux vidéo générés en sortie à partir du commutateur audio - vidéo (3) afin de reproduire le canal syntonisé par le premier syntoniseur en temps réel;
une seconde unité de traitement de signaux (2, 3, 9, 10, 11) en vue de coder un second signal vidéo des signaux vidéo générés en sortie à partir du commutateur audio - vidéo (3) afin de stocker le canal transmis syntonisé par le second syntoniseur (2), qui est le même que le canal syntonisé transmis par le premier syntoniseur (1);
une unité de stockage de données (13) en vue de stocker le signal vidéo traité par la seconde unité de traitement de signaux (2, 3, 9, 10, 11); et
un contrôleur (12) en vue d'occasionner l'affichage du signal vidéo traité par la première unité de traitement de signaux (1, 3, 4, 5) ou du signal vidéo traité par la seconde unité de traitement de signaux (2, 3, 9, 10, 11) et stocké dans l'unité de stockage de données (3).

2. Système d'enregistreur vidéo personnel (PVR) selon la revendication 1, dans lequel la première unité de traitement de signaux (1, 3, 4, 5) comporte:
un premier filtre en peigne numérique (4) en vue de séparer le signal vidéo généré en sortie à partir du commutateur audio - vidéo (3), qui commute le signal audio - vidéo extrait par le premier syntoniseur (1) en un signal de luminance et un signal de couleur; et
un premier décodeur vidéo (5) pour exécuter un processus de décodage en vue de transformer le signal de luminance et le signal de couleur séparés par le premier filtre en peigne numérique (4) en le signal de luminance et un signal de chrominance.

3. Système d'enregistreur vidéo personnel (PVR) selon la revendication 1 ou 2, dans lequel la seconde unité de traitement de signaux (2, 3, 9, 10, 11) comporte:
un second filtre en peigne numérique (9) en vue de séparer le signal vidéo généré en sortie à partir du commutateur audio - vidéo (3) qui commute le signal audio - vidéo extrait par le second syntoniseur (2) en un signal de luminance et un signal de couleur;
un second décodeur vidéo (10) en vue d'exécuter un processus de décodage en vue de transformer le signal de luminance et le signal de couleur séparés par le second filtre en peigne numérique (9) en le signal de luminance et un signal de chrominance; et
un codeur MPEG-2 (11) en vue de coder un signal d'image numérique généré en sortie à partir du second décodeur vidéo (10) afin de stocker le signal d'image numérique codé dans l'unité de stockage de données (13).

4. Système d'enregistreur vidéo personnel (PVR) selon la revendication 2, comportant en outre:
un processeur de mise à l'échelle (6) en vue de traiter un signal d'image numérique pour générer en sortie un signal rouge, vert et bleu (R, G, B) au moyen d'une transformation de matrice de signaux de luminance et de signaux de chrominance générés en sortie à partir de la première unité de traitement de signaux et en vue de décoder une image numérique codée, et
un décodeur MPEG-2 (7) en vue d'exécuter un traitement d'image du signal rouge, vert et bleu (R, G, B) traité par le processeur de mise à l'échelle en vue de générer en sortie le signal rouge, vert et bleu (R, G, B) traité au niveau d'un dispositif d'affichage (8).

5. Système d'enregistreur vidéo personnel (PVR) selon la revendication 1, comportant en outre:
une unité de traitement d'image (14) en vue de traiter des signaux vidéo traités par la première unité de traitement de signaux (1, 3, 4, 5) et la seconde unité de traitement de signaux (1, 3, 9, 10, 11) en vue de séparer les signaux vidéo en un premier écran et un second écran et d'afficher les premier et second écrans.

6. Système d'enregistreur vidéo personnel (PVR) selon la revendication 5, comportant en outre:
une unité d'entrée de touches (15) connectée au contrôleur (12) en vue de sélectionner un écran désiré entre les premier et second écrans.

7. Système d'enregistreur vidéo personnel (PVR) selon l'une quelconque des revendications précédentes, dans lequel le premier syntoniseur (1) et le second syntoniseur (2) sont l'un parmi un syntoniseur ATSC et un syntoniseur NTSC.

8. Système d'enregistreur vidéo personnel (PVR) selon la revendication 5 ou 6, dans lequel le contrôleur (12) est configuré en vue de commander l'unité de le traitement d'image (14) afin d'afficher l'un parmi le signal vidéo traité par la première unité de traitement de signaux (1, 3, 4, 5) et le signal vidéo traité par la seconde unité de traitement de signaux (2, 3, 9, 10, 11) selon l'entrée d'un utilisateur relativement à un réglage de qualité d'image.

9. Système d'enregistreur vidéo personnel (PVR) selon la revendication 5 ou 6, dans lequel le contrôleur (12) est configuré en vue de commander l'unité de traitement d'image (14) afin d'afficher l'un parmi le signal vidéo traité par la première unité de traitement de signaux (1, 3, 4, 5) et le signal vidéo traité par la seconde unité de traitement de signaux (2, 3, 9, 10, 11) selon l'entrée d'un utilisateur relativement un réglage par défaut de décalage temporel.

10. Système d'enregistreur vidéo personnel (PVR) selon la revendication 5 ou 6, dans lequel le contrôleur (12) est configuré en vue de stocker l'un parmi le signal vidéo traité par la première unité de traitement de signaux (1, 3, 4, 5) et le signal vidéo traité par la seconde unité de traitement de signaux (2, 3, 9, 10, 11) dans l'unité de stockage de données (13) selon l'entrée d'un utilisateur relativement à un réglage de stockage de données.

11. Procédé destiné à reproduire un signal transmis dans un système d'enregistreur vidéo personnel (PVR), comportant les étapes consistant à:
(a) traiter un signal vidéo à travers un premier trajet en vue de reproduire un canal syntonisé par un premier syntoniseur (1) en temps réel, le premier syntoniseur (1) extrayant un signal audio - vidéo à partir du canal syntonisé et le premier trajet comportant le premier syntoniseur (1), un commutateur audio - vidéo (3) en vue de commuter le signal audio - vidéo extrait par le premier syntoniseur (1) et de générer en sortie un signal commuté en réponse à cela, et une première unité de traitement de signaux (1, 3, 4, 5) pour exécuter le traitement d'image d'un premier signal vidéo généré en sortie à partir du commutateur audio - vidéo (3);
(b) syntoniser à un canal par un second syntoniseur (2), qui est le même que le canal syntonisé par le premier syntoniseur (1), et coder et stocker un signal vidéo du canal via un second trajet, le second syntoniseur (2) extrayant un signal audio - vidéo à partir du canal syntonisé et le second trajet comportant le second syntoniseur (2), un commutateur audio - vidéo (3) en vue de commuter le signal audio - vidéo extrait par le second syntoniseur (2) et en vue de générer en sortie un signal commuté en réponse à cela, et une seconde unité de traitement de signaux (2, 3, 9, 10, 11) en vue d'exécuter le traitement d'image d'un second signal vidéo généré en sortie à partir du commutateur audio - vidéo (3) et
(c) reproduire et afficher le signal vidéo traité à l'étape (a) lorsqu'un mode en cours destiné à visualiser une transmission en temps réel est sélectionné, et lire et reproduire le signal vidéo stocké à l'étape (b) lorsqu'un mode antérieur en vue de visualiser une transmission antérieure est sélectionné.

12. Procédé selon la revendication 11, comportant en outre les étapes consistant à:
sélectionner un mode de réglage de qualité d'image par l'utilisateur;
afficher, lorsque le mode de réglage de qualité d'image est sélectionné, un premier écran par l'intermédiaire du premier trajet et un second écran par l'intermédiaire du second trajet; et
régler une qualité d'image en sélectionnant l'un des premier et second écrans,
dans lequel le signal vidéo traité par l'intermédiaire du premier trajet est reproduit et affiché si l'écran sélectionné est le premier écran et dans lequel le signal vidéo codé et stocké par l'intermédiaire du second trajet est lu et reproduit si l'écran sélectionné est le second écran.

13. Procédé selon la revendication 11, comportant en outre les étapes consistant à:
sélectionner un mode par défaut de décalage temporel par un utilisateur,
afficher, lorsque le mode par défaut de décalage temporel est sélectionné, un premier écran par l'intermédiaire du premier trajet et un second écran par l'intermédiaire du second trajet; et
régler un décalage temporel par défaut en sélectionnant l'un des premier et second écrans,
dans lequel le décalage temporel par défaut est réglé en vue de reproduire et d'afficher le signal vidéo traité par l'intermédiaire du premier trajet si l'écran sélectionné est le premier écran, et dans lequel le décalage temporel par défaut est régler en vue de lire et de reproduire le signal vidéo traité par l'intermédiaire du second trajet si l'écran sélectionné est le second écran.

14. Procédé selon la revendication 11, comportant en outre les étapes consistant à:
sélectionner un mode de réglage de stockage de données par un utilisateur;
afficher, lorsque le mode de réglage de stockage de données est sélectionné, un premier écran par l'intermédiaire du premier trajet et un second écran par l'intermédiaire du second trajet; et
stocker un signal vidéo selon une sélection de l'un parmi les premier et second écrans,
dans lequel le signal vidéo traité par l'intermédiaire du premier trajet est stocké en sélectionnant le premier écran et dans lequel le signal vidéo traité par l'intermédiaire du second trajet est stocké en sélectionnant le second écran.
